# EUROPÄISCHE PATENTSCHRIFT

(11) **EP 0 755 368 B1**
(45) Veröffentlichungstag und Bekanntmachung des Hinweises auf die Patenterteilung: **28.10.1998**
(21) Anmeldenummer: 95913009.7
(22) Anmeldetag: 08.03.1995
(51) Int. Cl.: C05F 17/02, B01F 7/08

(54) **VORRICHTUNG ZUM UMSETZEN VON KOMPOST**
DEVICE FOR TURNING COMPOST
DISPOSITIF DESTINE AU RETOURNAGE D'UN COMPOST

(30) Priorität: 13.04.1994 DE 4412638
(43) Veröffentlichungstag der Anmeldung: 29.01.1997
(73) Patentinhaber: Friedrich Backhus Kompost-Technologie, 26188 Edewecht (DE)
(72) Erfinder: BACKHUS, Friedrich, D-26188 Edewecht (DE); GERDES, Stefan, D-26188 Edewecht (DE)
(74) Vertreter: Lauerwald, Jörg, Dipl.-Phys.
(86) Internationale Anmeldenummer: DE9500317
(87) Internationale Veröffentlichungsnummer: WO9528367

(56) Entgegenhaltungen:
- EP-A- 0 060 229
- EP-A- 0 523 009
- EP-A- 0 569 919
- WO-A-94/21577

## Beschreibung

Die Erfindung betrifft eine Vorrichtung zum Umsetzen von Kompost in einer in einen Flurboden eingelassenen Tunnelmiete mit einem Fahrwerk, das derart ausgebildet ist, daß es auf beiden Seiten einer Tunnelmiete auf dem Flurboden zu laufen in der Lage ist, und mit einer quer zur Fahrtrichtung angeordneten, in die Tunnelmiete hineinragenden, horizontalen Umsetzeinrichtung, wobei die Umsetzeinrichtung an einem Tragelement angeordnet ist und das Tragelement mit der Umsetzeinrichtung aus der Tunnelmiete bis über den Flurboden herausbewegbar ist.

Ein altes, bewährtes Kompostierverfahren ist die Mietenkompostierung, bei der Mieten in verschiedenen Formen aufgesetzt werden. In Tunnelmieten ist das zu kompostierende Material in einer Grube angehäuft. Speziell entwickelte Vorrichtungen setzen mit Hilfe unterschiedlicher Werkzeuge das zu kompostierende Material um, um eine ausreichende Sauerstoffzufuhr und notwendige Homogenisierung zu fördern.

Es ist eine Gruppe von Kompostumsetzvorrichtungen bekannt, bei denen die Umsetzeinrichtung an ihren beiden Enden von Tragelementen aufgenommen wird. Derartiges offenbaren zum Beispiel die EP-A 0 569 919 und die EP-A 0 523 009. Umsetzvorrichtungen mit dieser Art der Aufhängung haben beim Umsetzen in Tunnelmieten den Nachteil, daß sich ein Bereich des zu kompostierenden Materials zwischen der Umsetzeinrichtung und jeder Seitenwand der Grube herausbildet, der nicht mit umgesetzt wird. Die Umsetzeinrichtung reicht aufgrund ihrer Aufnahme an ihren beiden Enden nicht bis an die Seitenwände der Grube heran. Der so gebildete Bereich des zu kompostierenden Materials wird nicht mit umgesetzt und erschwert den Vorschub der Umsetzvorrichtung durch erhöhte Reibung.

Vorrichtungen der bekannten Art können mit fest angeordneten Umsetzeinrichtungen weiterhin den Nachteil haben, daß sie keine Rückfahrt der Umsetzvorrichtung ohne die Durchführung eines Umsetzvorganges ermöglichen. Auch der Transport eines Kompostumsetzers wird durch derart ausgebildete Umsetzeinrichtungen behindert.

Der Erfindung liegt die Aufgabe zugrunde, eine Vorrichtung zum Umsetzen von Kompost der eingangs genannten Gattung zu schaffen, mit der in Tunnelmieten gelagertes, zu kompostierendes Material über die gesamte Breite der Tunnelmiete umsetzbar ist, die ohne die Durchführung eines Umsetzvorganges frei rückfahrbar ist und die ohne die Behinderung durch die Umsetzeinrichtung transportierbar ist.

Diese Aufgabe ist erfindungsgemäß dadurch gelöst worden, daß sich das Tragelement in der Längsmittelebene des Fahrwerkes befindet und daß sich die Umsetzeinrichtung vom Tragelement in beide Richtungen auswärts erstreckt.

Bei der erfindungsgemäßen Umsetzvorrichtung kann sich die Umsetzeinrichtung durch die mittlere Anordnung des Tragelementes bis an die Seitenwände der Grube der Tunnelmiete erstrecken, wodurch sich an diesen Seitenwänden kein Bereich des zu kompostierenden Materials ausbildet. Vorteilhaft wird somit das in der Grube angehäufte, zu kompostierende Material über die gesamte Breite der Tunnelmiete umgesetzt. Der Vortrieb der Umsetzvorrichtung wird außerdem nicht durch eine erhöhte Reibung an dem Bereich des zu kompostierenden Materials an den Grubenseitenwänden behindert.

Durch das Herausbewegen des Tragelementes mit der Umsetzeinrichtung ergibt sich zunächst der weitere Vorteil, daß die freie Rückfahrt ohne die Durchführung eines Umsetzvorganges ermöglicht wird. Mit herausbewegter Umsetzeinrichtung kann die Umsetzvorrichtung schnell zu jedem Abschnitt der Tunnelmiete gefahren werden. Die Umsetzvorrichtung ist mit über den Flurboden herausbewegter Umsetzeinrichtung schließlich vorteilhaft mit weniger Aufwand zu transportieren. Zum Transport kann dann beispielsweise ein Transportwagen eingesetzt werden, auf den das Fahrwerk der Umsetzvorrichtung geschoben werden kann.

Nach einer ersten Weiterbildung der Erfindung ist die Vorrichtung dadurch gekennzeichnet, daß das Tragelement mit der Umsetzeinrichtung vertikal aus der Tunnelmiete über den Flurboden heraushebbar ist. Die Umsetzvorrichtung kann mit der durch das Tragelement hochgehobenen Umsetzeinrichtung über der Grube frei bewegt werden. Der Mechanismus für das Herausheben der Umsetzeinrichtung kann eine vorteilhaft einfache, mechanische Ausbildung aufweisen.

Nach einer weiteren Lösung der Erfindung ist die Vorrichtung dadurch gekennzeichnet, daß das Tragelement mit der Umsetzeinrichtung auf einer Kreisbahn aus der Tunnelmiete, über den Flurboden herausschwenkbar ist. Die derart herausgeschwenkte Umsetzeinrichtung ermöglicht gleichfalls mit Vorteil die freie Bewegung der Umsetzvorrichtung über der Grube des Tunnelsilos.

Vorteilhaft ragt die herausgeschwenkte Umsetzeinrichtung nur wenig über das auf dem Flurboden laufende Fahrwerk hinaus.

Nach einer Weiterbildung der Erfindung ist in vorteilhafter Weise zwischen dem Tragelement und dem Fahrwerk ein durch wenigstens einen Druckmittelzylinder bewegbares Hebelgestänge zum Herausschwenken des Tragelementes mit der Umsetzeinrichtung angeordnet. Diese Lösung ist einfach herstellbar und kostengünstig.

Eine andere Weiterbildung der Erfindung sieht vor, daß ein Antriebsmotor für die Umsetzeinrichtung oberhalb der Umsetzeinrichtung angeordnet ist und mit dieser über eine Antriebswelle und ein in der Umsetzeinrichtung angeordnetes Getriebe antriebsmäßig verbunden ist. Diese Ausbildung hat den Vorteil, daß der Antriebsmotor oberhalb der Umsetzeinrichtung, vorzugsweise oberhalb des Flurbodens, nicht mit der Umsetzeinrichtung durch das zu kompostierende Material geführt werden muß. Dadurch kann auf eine wärmestauende Abkapselung des Antriebsmotors verzichtet werden, auch mit dem Vorteil, daß der Antriebsmotor zu Wartungszwecken frei zugänglich ist.

Nach einer anderen Weiterbildung der Erfindung ist die Vorrichtung dadurch gekennzeichnet, daß die Antriebswelle in dem Tragelement geführt ist. Vorteilhaft ist die Antriebswelle so gegenüber dem zu kompostierenden Material abgeschirmt. Bei einer Anordnung des Antriebsmotors auf der in dem Tragelement geführten Antriebswelle werden Antriebsmotor und Antriebswelle beim Herausschwenken der Umsetzeinrichtung mitgeschwenkt.

Nach einer weiteren Weiterbildung der Erfindung ist die Vorrichtung dadurch gekennzeichnet, daß das Tragelement als dünnes Schwert ausgebildet ist, dessen Längsmittelebene in der Längsmittelebene des Fahrwerkes liegt. Ein derartiges dünnes Schwert hat den Vorteil, daß es beim Umsetzvorgang mit relativ geringem Widerstand durch das zu kompostierende Material schneiden kann und somit den Vortrieb der Umsetzvorrichtung nur unerheblich behindert.

Bei der mit seinem Fahrwerk an einen bestimmten Arbeitsbereich gebundenen Umsetzvorrichtung, die zudem vorwiegend in geschlossenen Hallen betrieben wird, ist es zweckmäßig, daß der Antriebsmotor für die Umsetzeinrichtung als Elektromotor ausgebildet ist.

Zur weiteren Ausbildung der Erfindung ist schließlich vorgesehen, daß die horizontale Umsetzeinrichtung als Schneckenrotor ausgebildet ist. Mit einem horizontalen Schneckenrotor können die drei Teilfunktionen beim Umsetzen des zu kompostierenden Materials, nämlich Aufnehmen, Mischen und Abgeben vorteilhaft mit nur einem Bauelement durchgeführt werden. Zusätzlich besteht die Möglichkeit, den Schneckenrotor nur als Aufnahmewerkzeug fungieren zu lassen und Fördersysteme nachzuschalten, um ein Versetzen von Mieten zu ermöglichen.

Ausführungsbeispiele der Erfindung, aus denen sich weitere erfinderische Merkmale ergeben, sind in der Zeichnung dargestellt. Es zeigen:

Fig.1 eine Vorderansicht eines ersten Ausführungsbeispiels der erfindungsgemäßen Vorrichtung, die längs der Linien Ia-Ia und Ib-Ib in Fig. 2 teilweise geschnitten ist,
Fig.2 eine Seitenansicht des ersten Ausführungsbeispiels der erfindungsgemäßen Vorrichtung, die längs der Linie II-II in Fig. 1 teilweise geschnitten ist, und
Fig. 3 eine schematische Seitenansicht in verkleinertem Maßstab eines zweiten Ausführungsbeispiels der erfindungsgemäßen Vorrichtung.

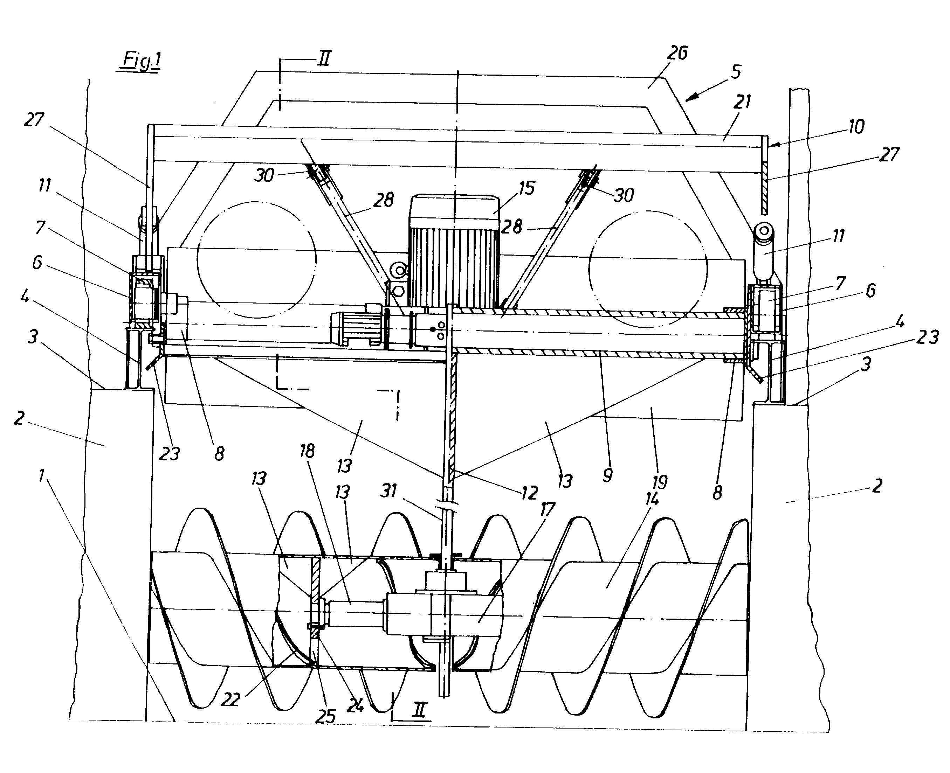

Figur 1 zeigt die Tunnelmiete mit dem Tunnelboden 1 und zwei Seitenwänden 2. Die Seitenwände 2 verlaufen vom Tunnelboden 1 bis zum Flurboden 3. Auf dem Flurboden 3 sind parallel zur Längsachse der Tunnelmiete Doppel-T-Profile 4 angeordnet, auf denen das Fahrwerk 5 der Vorrichtung mit in Hohlprofilen 6 geführten Laufrädern 7 aufsitzt. Die Hohlprofile 6 sind an jeweils einem seitlichen, abgewinkelten Fahrwerksrahmenträger 23 angeordnet, beide Fahrwerksrahmenträger 23 sind über eine Rahmenkonstruktion 26 miteinander verbunden. Ein Antriebsmotor für die Bewegung des Fahrwerkes 5 auf den Doppel-T-Profilen 4 ist nicht dargestellt.

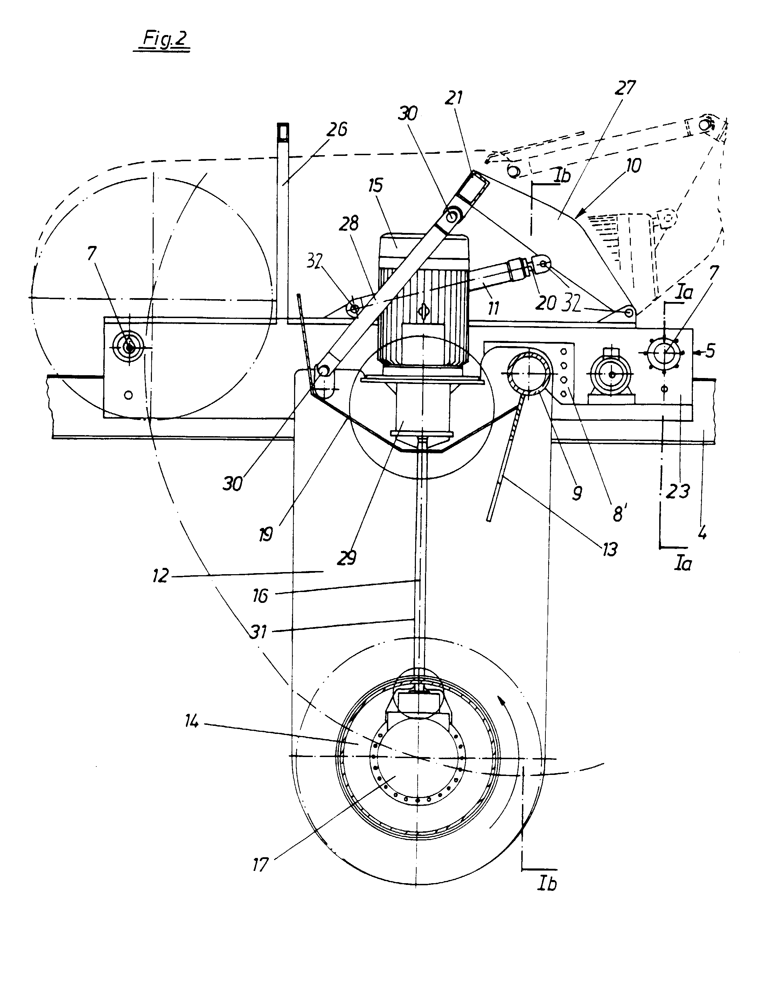

Zwischen den einander gegenüberliegenden Fahrwerksrahmenträgern 23 ist ein Schwenkrohr 9 in zwei Gleitlagern 8 aufgenommen. Oberhalb des Schwenkrohres 9 ist ein Hebelgestänge 10 mit Druckmittelzylindern 11 zum Schwenken des Schwenkrohres 9 angeordnet, das aus Figur 2 weiter ersichtlich ist. Mit dem Schwenkrohr 9 ist ein Schwert 12 als Tragelement eines die Umsetzeinrichtung bildenden, quer zur Tunnelmiete angeordneten Schneckenrotors 14 fest verbunden. Das Schwert 12 ist als ein aus zwei Blechen zusammengesetzter Hohlkörper ausgebildet, der sich in der Längsmittelebene des Fahrwerkes 5 erstreckt. Die Verbindung von Schwenkrohr 9 und Schwert 12 wird durch angeschweißte, schräg verlaufende Knotenbleche 13 unterstützt. Der Schneckenrotor 14 reicht unmittelbar an die Seitenwände 2 der Tunnelmiete heran.

Ein Elektromotor 15 ist auf Höhe des Schwenkrohres 9 auf dem Schwert 12 angeordnet. Unterhalb des Elektromotors 15 verläuft vertikal eine in der Figur 2 gezeigte Antriebswelle 16. Die Antriebswelle 16 ist innerhalb des Schwertes 12 in einem Schutzrohr 31 geführt. Das untere Ende der Antriebswelle 16 ist mit einem mittig im Schneckenrotor 14 angeordneten Getriebe 17 verbunden. Das Getriebe 17 wandelt die Drehbewegung der Antriebswelle 16 in Drehbewegungen einer durchgehenden Antriebswelle 18 um. Die Drehbewegung der durchgehenden Antriebswelle 18 wird auf Querstreben 24 im Schneckenrotor 14 übertragen. Die Querstreben 24 sind im Innern des Schneckenrotors 14 verschweißt und mit Knotenblechen 13 abgestützt. Die Querstreben 24 weisen Durchbrüche 25 für den inneren, gegenläufigen Schneckengang 22 auf, mit dem eingefallener Kompost nach außen befördert wird. Der Elektromotor 15 ist durch ein Schutzblech 19 gegen hochgeworfenen Kompost geschützt.

Figur 2 zeigt das mit dem in Schnittansicht dargestellten Schwenkrohr 9 verschweißte Schwert 12 in Seitenansicht.

Die Längsachse des Schwenkrohrs 9 bildet die Drehachse für das Schwert 12 und damit zugleich für den Schneckenrotor 14. In die Drehbewegungsübertragung vom Elektromotor 15 über die Antriebswelle 16 zum Getriebe 17 ist unmittelbar unterhalb des Elektromotors 15 eine Kupplung in einem Kupplungsgehäuse 29 angeordnet.

Aus der Figur 2 sind die einzelnen Bauelemente des Hebelgestänges 10 ersichtlich. Der Druckmittelzylinder 11 ist in einem Gelenk 32 auf dem Fahrwerksrahmenträger 23 schwenkbar gelagert. Das freie Ende des Kolbens 20 des Druckmittelzylinders 11 ist über ein Gelenk 32 mit einem Joch 27 verbunden. Das Joch 27 ist mit seinem unterem Ende auch in einem Gelenk 32 auf dem Fahrwerksrahmenträger 23 schwenkbar gelagert. Am oberen Ende des Jochs 27 ist ein Vierkantprofil 21 rechtwinkelig angeschweißt. Über einen Gelenkkopf 30 ist eine Zugstange 28 mit dem Vierkantprofil 21 kraftschlüssig verbunden. Das untere Ende der Zugstange 28 ist über einen Gelenkkopf 30 mit dem Schwert 12 verbunden. Beim Herausschwenken des Schneckenrotors 14 wird die Ausfahrbewegung des Kolbens 20 des Druckmittelzylinders 11 über Joch 27, Vierkantprofil 21 und Zugstange 28 auf das Schwert 12 übertragen, welches auf einer Kreisbahn nach hinten aus der Tunnelmiete herausgeschwenkt wird. Das Schwenkrohr 9 dreht sich dabei in den am Fahrwerksrahmenträger 23 angeschraubten, hier lediglich durch eine ihrer Lagerplatten 8' erkennbaren Gleitlagern 8. Das Schwert 12 liegt nach dem Herausschwenken zwischen den Fahrwerksrahmenträgern 23 über dem Flurboden 3. Diese Hochlage ist in der Figur 2 mit gestrichelten Linien angedeutet.

Wie aus der Figur 1 ersichtlich ist, sind die Joche 27 des Schwenkgestänges über das Vierkantprofil 21 miteinander verbunden. Figur 1 verdeutlicht, daß die Zugstangen 28 beidseitig an das Schwert 12 angreifen.

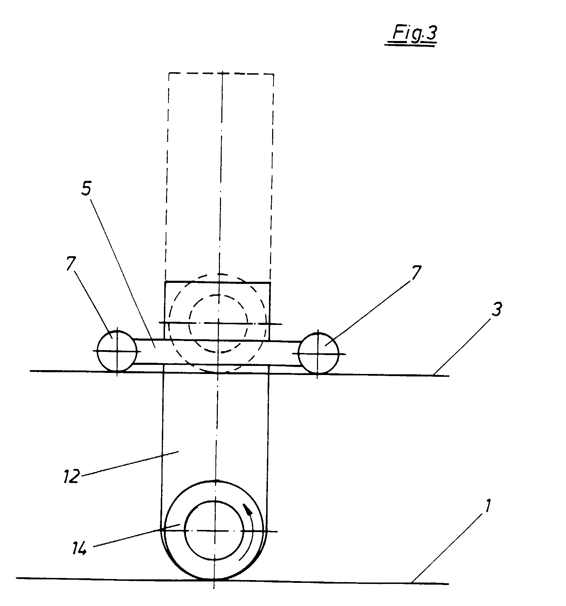

Figur 3 zeigt das zweite Ausführungsbeispiel der Vorrichtung zur Umsetzung von Kompost. Das Fahrwerk ist mit 5 bezeichnet, es ist mit Laufrädern 7 in an sich bekannter Weise auf dem Flurboden 3 aufgesetzt. An dem abwärts verlaufenden Schwert 12 ist der Schneckenrotor 14 gelagert, wie im Einzelnen im ersten Ausführungsbeispiel beschrieben.

Mit Hilfe einer nicht weiter dargestellten Parallelführung kann das Schwert 12 mit dem Schneckenrotor 14 vertikal aus der Grube der Tunnelmiete herausgehoben werden. Mit gestrichelten Linien ist die hochgehobene Position des Schwertes 12 und des Schneckenrotors 14 verdeutlicht.

## Patentansprüche

1. Vorrichtung zum Umsetzen von Kompost in einer in einen Flurboden (3) eingelassenen Tunnelmiete mit einem Fahrwerk (5), das derart ausgebildet ist, daß es auf beiden Seiten einer Tunnelmiete auf dem Flurboden zu laufen in der Lage ist, und mit einer quer zur Fahrtrichtung angeordneten, in die Tunnelmiete hineinragenden, horizontalen Umsetzeinrichtung, wobei die Umsetzeinrichtung an einem Tragelement angeordnet ist und das Tragelement mit der Umsetzeinrichtung aus der Tunnelmiete bis über den Flurboden (3) herausbewegbar ist,
dadurch gekennzeichnet,
daß sich das Tragelement in der Längsmittelebene des Fahrwerkes (5) befindet und daß sich die Umsetzeinrichtung vom Tragelement in beide Richtungen auswärts erstreckt.

2. Vorrichtung nach Anspruch 1, dadurch gekennzeichnet, daß das Tragelement mit der Umsetzeinrichtung aus der Tunnelmiete vertikal über den Flurboden (3) heraushebbar ist.

3. Vorrichtung nach Anspruch 1, dadurch gekennzeichnet, daß das Tragelement mit der Umsetzeinrichtung aus der Tunnelmiete auf einer Kreisbahn über den Flurboden (3) herausschwenkbar ist.

4. Vorrichtung nach Anspruch 3, dadurch gekennzeichnet, daß zwischen dem Tragelement und dem Fahrwerk (5) ein durch wenigstens einen Druckmittelzylinder (11) bewegbares Hebelgestänge (10) zum Herausschwenken des Tragelementes mit der Umsetzeinrichtung angeordnet ist.

5. Vorrichtung nach einem der Ansprüche 1 bis 3, dadurch gekennzeichnet, daß ein Antriebsmotor für die Umsetzeinrichtung oberhalb der Umsetzeinrichtung angeordnet ist und mit dieser über eine Antriebswelle (16) und ein in der Umsetzeinrichtung angeordnetes Getriebe (17) antriebsmäßig verbunden ist.

6. Vorrichtung nach Anspruch 5, dadurch gekennzeichnet, daß die Antriebswelle (16) in dem Tragelement geführt ist.

7. Vorrichtung nach einem der Ansprüche 1 bis 4 und 6, dadurch gekennzeichnet, daß das Tragelement als dünnes Schwert (12) ausgebildet ist, dessen Längsmittelebene in der Längsmittelebene des Fahrwerkes (5) liegt.

8. Vorrichtung nach Anspruch 5, dadurch gekennzeichnet, daß der Antriebsmotor für die Umsetzeinrichtung ein Elektromotor (15) ist.

9. Vorrichtung nach einem der Ansprüche 1 bis 5 und 8, dadurch gekennzeichnet, daß die horizontale Umsetzeinrichtung als Schneckenrotor (14) ausgebildet ist.

## Claims

1. Apparatus for shifting compost in a tunnel silo embedded in a floor (3), having a traversing device (5) which is such that it is in a position to run on the floor on both sides of a tunnel silo, and having a horizontal shifting means which is arranged transversely to the direction of travel and projects into the tunnel silo, the shifting means being arranged on a supporting element and the supporting element together with the shifting means being movable from the tunnel silo to above the floor (3), characterised in that the supporting element is located in the longitudinal central plane of the traversing device (5) and in that the shifting means extends outwards from the supporting element in both directions.

2. Apparatus in accordance with Claim 1, characterised in that the supporting element together with the shifting means can be raised vertically above the floor (3) from the tunnel silo.

3. Apparatus in accordance with Claim 1, characterised in that the supporting element together with the shifting means can be swung out above the floor (3) from the tunnel silo on a circular path.

4. Apparatus in accordance with Claim 3, characterised in that between the supporting element and the traversing device (5), a lever linkage (10) for swinging out the supporting element together with the shifting means is arranged, this lever linkage (10) being movable by at least one pressure-medium cylinder (11).

5. Apparatus in accordance with any one of Claims 1 to 3, characterised in that a driving motor for the shifting means is arranged above the shifting means and is in drive-wise connection therewith via a driving shaft (16) and a gear (17) arranged in the shifting means.

6. Apparatus in accordance with Claim 5, characterised in that the driving shaft (16) extends within the supporting element.

7. Apparatus in accordance with any one of Claims 1 to 4 and 6, characterised in that the supporting element is in the form of a thin blade (12) whose longitudinal central plane lies in the longitudinal central plane of the traversing device (5).

8. Apparatus in accordance with Claim 5, characterised in that the driving motor for the shifting means is an electric motor (15).

9. Apparatus in accordance with any of Claims 1 to 5 and 8, characterised in that the horizontal shifting means is in the form of a worm rotor (14).

## Revendications

1. Dispositif pour retourner du compost entreposé dans un silo à tunnel enterré dans un champ (3), ce dispositif comportant un mécanisme de roulement (5), lequel est réalisé de manière à pouvoir rouler sur ledit champ des deux côtés d'un silo à tunnel, et comportant un dispositif de retournement horizontal, pénétrant dans le silo à tunnel, et disposé transversalement à la direction du déplacement, ce dispositif de retournement étant disposé sur un élément support, et ledit élément support pouvant être sorti, avec le dispositif de retournement, du silo à tunnel jusqu'au-dessus du niveau du champ (3), caractérisé en ce que l'élément support se trouve dans le plan central longitudinal du mécanisme de roulement (5) et que le dispositif de retournement s'étend à partir de l'élément support vers l'extérieur dans les deux directions.

2. Dispositif selon la revendication 1 caractérisé en ce que l'élément support avec le dispositif de retournement, pour le sortir du silo à tunnel, peut être soulevé verticalement au-dessus du niveau du champ (3).

3. Dispositif selon la revendication 1, caractérisé en ce que l'élément support avec le dispositif de retournement peut être sorti du silo à tunnel par basculement jusqu'au-dessus du champ (3), ce basculement s'effectuant sur une voie circulaire.

4. Dispositif selon la revendication 3, caractérisé en ce qu'entre l'élément support et le mécanisme de roulement (5) est disposée une tringlerie à leviers (10), mobile grâce à au moins un vérin pneumatique (11), destinée à faire sortir par basculement l'élément support avec le dispositif de retournement.

5. Dispositif selon l'une des revendications 1 à 3 caractérisé en ce qu'un moteur d'entraînement pour le dispositif de retournement est disposé au-dessus de celui-ci et assure sa motorisation par l'intermédiaire d'un arbre de moteur (16) et d'une transmission (17) disposée dans ledit dispositif de retournement.

6. Dispositif selon la revendication 5, caractérisé en ce que l'arbre moteur (16) passe à l'intérieur de l'élément support.

7. Dispositif selon l'une des revendications 1 à 4 et 6 caractérisé en ce que l'élément support est réalisé sous la forme d'une semelle mince (12) dont le plan central longitudinal se situe dans le plan central longitudinal du mécanisme de roulement (5).

8. Dispositif selon la revendication 5, caractérisé en ce que le moteur d'entraînement du dispositif de retournement est un moteur électrique (15).

9. Dispositif selon l'une des revendications 1 à 5 et 8, caractérisé en ce que le dispositif de retournement horizontal est réalisé sous la forme d'un rotor à vis sans fin (14).
